**Europäisches Patentamt**

(19) **European Patent Office**

**Office européen des brevets**

(11) Publication number: **0 131 572**
**B1**

(12) **EUROPEAN PATENT SPECIFICATION**

(45) Date of publication of patent specification: **26.09.90**

(51) Int. Cl.[5]: **H 01 J 49/36, B 01 D 59/48**

(21) Application number: **83901123.6**

(22) Date of filing: **13.01.83**

(86) International application number:
**PCT/US83/00050**

(87) International publication number:
**WO 84/02803 19.07.84 Gazette 84/17**

(54) **METHOD OF AND APPARATUS FOR ISOTOPE SEPARATION.**

(43) Date of publication of application:
**23.01.85 Bulletin 85/04**

(45) Publication of the grant of the patent:
**26.09.90 Bulletin 90/39**

(84) Designated Contracting States:
**BE FR GB**

(56) References cited:
**GB-A-1 014 382**
**US-A-4 059 761**
**US-A-4 066 893**
**US-A-4 081 677**
**US-A-4 167 668**
**US-A-4 199 679**
**US-A-4 208 582**

**"Electromagnetic Separation of Isotopes in Commercial Quantities", June 1949, Wakerling et al, Chapter 12, pp. 396-419**
**Physics of Fluids, Vol. 15, No. 11, November 1972, pp. 2057-2060, Schmitt.**
**Physical Review Letters, Vol. 37, No. 23, 6 December 1976, pp. 1547-1550, Dawson et al.**

(73) Proprietor: **TRW INC.**
**One Space Park E2/7073**
**Redondo Beach, CA 90278 (US)**

(72) Inventor: **ROMESSER, Thomas, E.**
**2404 Harriman Lane**
**Redondo Beach, CA 90278 (US)**
Inventor: **LAZAR, Norman, H.**
**26582 Academy Drive**
**Palos Verdes Peninsula CA 90274 (US)**
Inventor: **McVEY, Brian, D.**
**75 Cleveland Street**
**Arlington, MA 02174 (US)**
Inventor: **MUSSETTO, Michael, S.**
**26201 South Vermont Avenue, No. 304**
**Harbor City, CA 90710 (US)**
Inventor: **ARNUSH, Donald**
**6018 Via Sonoma**
**Rancho Palos Verdes, CA 90274 (US)**
Inventor: **HEFLINGER, Lee, O.**
**5001 Paseo de Pablo**
**Torrance, CA 90505 (US)**

(74) Representative: **Allden, Thomas Stanley et al**
**A.A. THORNTON & CO. Northumberland House**
**303-306 High Holborn**
**London WC1V 7LE (GB)**

## Description

### Background of the invention

The present invention relates to improvements in processes and apparatus for isotope separation in a dense plasma of the type generally disclosed, for example, in United Stated patent 4,059,761.

Reference is also made to a paper by Dawson et al entitled "Isotope Separation in Plasmas by Use of Ion Cyclotron Resonance" which appears in Physical Review Letters, Volume 37, No. 23 of December 6, 1976, pages 1547 through 1550, and to the following related patents: U.S. 4,208,582 to Arnush et al and U.S. 4,093,856 to Stenzel.

Since the issuance of these patents considerable work has been carried out relating to uniform-density plasma and high-density quiescent plasmas. In particular, efforts have been made to improve the source of ions of an element to be separated, and the manner in which differential kinetic energy is imparted to ions containing selected isotopes of the element. This makes it possible to impart more kinetic energy to a desired isotope than to the others. Finally, improvements have been made in the differential collection of the desired isotope, thereby to obtain augmented enrichment of the desired isotope.

### Summary of the invention

The present invention proceeds from, and embraces several improvements in the process for isotope enrichment described in the above-mentioned Dawson et al publication and the several patents cited above, all of which are hereby incorporated by reference herein. These prior publications describe the plasma separation process as inlcuding several distinct steps: First, establishing a magnetic field extending substantially parallel to a predetermined axis and having a large cross-sectional area, e.g. transverse dimensions substantially exceeding the diameter of the orbits of selected-isotope ions within the magnetic field. Secondly, providing, within the magnetic field, a body of plasma which includes ions that comprise atoms of an element having at least two isotopes. Where the goal is uranium enrichment these ions include uranium atoms, and the plasma may, for example, consist essentially of ionized uranium atoms and free electrons. Thirdly, differentially imparting kinetic energy to selected-isotope ions (e.g. the U235 ions contained in the plasma) by applying an alternating electric field to the plasma in a manner such that selected-isotope ions are preferentially accelerated to travel, with increased velocity, orbitally, within the plasma. And, finally, preferentially collecting the selected-isotope ions either on the basis of their higher kinetic energies or on the basis of their larger orbits, or both.

The method of the present invention is characterised in that the alternating electric field is applied by means of a plurality of conductors extending helically around a portion of the plasma column, and in that alternating current of said orbital frequency of a harmonic of said orbital frequency is fed to said conductors with the phase of adjacent conductors being shifted.

The present invention also provides apparatus for isotope enrichment characterised in that the means for generating an alternating electric field comprises a plurality of conductors extending helically around a portion of the plasma column and a power supply for feeding an alternating current of said orbital frequency or a harmonic of said orbital frequency to said conductors, the phase of adjacent conductors being shifted.

More specifically, a preferred embodiment of the present invention discloses a technique and an apparatus by which high-density plasma may be formed, continuously, within a diverging-field portion of the magnetic field and flows from that location into an adjacent region of uniform magnetic field intensity. This provides a large-diameter stream of plasma of substantially uniform density flowing longitudinally at all incremental locations across a predetermined cross-sectional area of a large-diameter magnetic field. While our plasma generation method and apparatus is particularly advantageous for use in the above-described plasma isotope separation process, it is not so limited but may be used whereever there is a need to form a large-diameter, uniform and quiescent body of stream of dense plasma. For example, plasma sources in accordance with our invention may be used for many of the systems and purpose described in "Q Machines" by Motley, Robert W., Academic Press, New York (1975).

We also disclose an improved method and apparatus for subjecting a large-diameter dense plasma to an alternating electric field of a frequency corresponding to the orbital frequency of selected-isotope ions, or a harmonic of that orbital frequency. We use an elongated induction-coil assembly which is especially constructed and arranged to generate an alternating magnetic field, at the desired differential-excitation frequency, with the AC magnetic vector extending generally, but not precisely, perpendicular to the axis of the plasma column. This magnetic field induces in the plasma column an alternating electric field having a normal-to-the-axis component and a separate parallel-to-the-axis component. This latter component has an importantly beneficial effect: At all transversely spaced incremental portions of the plasma column it causes electrons to shuttle longitudinally back and forth at the ion-cyclotron-resonance frequency. This shuttling of electrons functions to create a potential gradient transversely across each incremental portion of the plasma. Thus, even though the plasma is dense and highly conductive, outer portions thereof do not shield the inner portions from the applied alternating field. The electron-shuttling effect causes the induced alternating electric field to penetrate to all portions of the dense plasma, even when a plasma column having a diameter of the order of 3 meters is employed.

The novel features that are considered characteristic of our invention are set forth with particularity in the appended Claims. The invention itself, however, both as to its organization and method of operation, as well as additional objects and advantages thereof, will best be understood from the following descriptions when read in connection with the accompanying drawings.

Brief description of the drawings

Fig. 1 is a schematic cross-sectional view of apparatus in accordance with the present invention for the enrichment of a desired isotope, the outer casing of the apparatus being omitted;

Fig. 2 is a side elevational view of a monolithic or segmented plate including a heat exchanger and a schematically shown support structure for providing neutral atoms by sputtering;

Fig. 3 is an end view of the four drive coils for imparting kinetic energy to selected-isotope ions within the plasma;

Fig. 4 is a schematic view in perspective of the four drive coils and their electrical connections to transmission lines for energizing them;

Fig. 5 is a schematic diagram of circuitry for feeding four-phase alternating current power to the drive coils;

Fig. 6 is an elevational view of one collector, showing the orbits of two ions of a desired and undesired isotope;

Fig. 7 is an enlarged elevational view showing a set of the collector plates and their shields; and

Fig. 8 is a front elevational view of the assembly of Fig. 7 and illustrating a graphite fence or shield to inhibit collection of electrons.

Figs. 9a to 9d are vector diagrams illustrating electric field conditions in the plasma.

Brief overall description of the apparatus

As noted hereinabove, our invention relates specifically to improved methods and apparatus, particularly useful in plasma isotope separation as described by Dawson et al, for producing a large body of dense plasma within a magnetic field and differentially accelerating and preferentially collecting selected-isotope ions within the plasma. Perhaps more importantly, our invention enables continuous-process isotope separation within a large-diameter, elongate plasma column by providing for continuous production of fresh plasma at one end of the plasma column and within the magnetic field, which magnetically confines the plasma column to a predetermined plasma-flow pathway. This pathway includes, at one end, a source region where dense plasma is continuously generated in accordance with our invention. The plasma pathway also includes (1) an excitation region, intermediate the ends, where the plasma is subjected to an alternating electric field for differentially accelerating selected-isotope ions and (2) a collection region, located downstream from the excitation region, where higher-energy ions are preferentially collected to produce isotopically-enriched product.

For quantity production of enriched material, e.g; enriched uranium, it is highly desirable to use a plasma column having large cross-sectional dimensions. For example, we prefer to use a substantially cylindrical column having a diameter of about one meter or larger, and it is highly desirable that the plasma be substantially uniform in density across this large cross-sectional area.

Uranium ions within the plasma, being charged particles, are constrained to travel in different, transversely-spaced orbits around magnetic field lines; they cannot migrate, or diffuse, transversely of the magnetic field. Thus, it is not practical to produce a uniform density plasma by techniques involving generation of ions outside the magnetic field and subsequent injection of them into the field. Moreover, most techniques for generating free ions within the magnetic field tend to create density non-uniformities in the form of density striations extending along the plasma column. Our invention overcomes these difficulties by providing a method wherein nonionized metallic vapor is produced, uniformly, over a large area within the magnetic field, diffuses freely transversely of the magnetic field lines and is ionized in-situ within the magnetic field, only after a uniform density distribution has been realized over a predetermined, large, cross-sectional area. Thus, upon in-situ ionization of the uranium-containing vapor we produce, continuously, a flowing stream of plasma having a density that is substantially the same throughout the magnetized plasma column.

Immediately adjacent the source region we provide an excitation region wherein the magnetic field strength is substantially uniform, longitudinally and transversely, and wherein an alternating electric field is applied to the plasma for differentially accelerating selected-isotope ions to relatively high energy levels so that such ions travel in expanded orbits of rotation throughout the large-area plasma. One aspect of the present invention is concerned with improved methods and apparatus for applying this alternating electric field to all transversely spaced portions of the plasma within the excitation region.

As our invention is applied to isotope separation systems and plasma pathway also includes a collection region, located downstream from the excitation region, where higher-energy ions are preferentially collected to produce isotopically-enriched product. Thus another feature and object of our invention is provision of collector means for efficiently collecting, within the plasma, selected-isotope ions on the basis of their higher kinetic energies and/or their larger orbits.

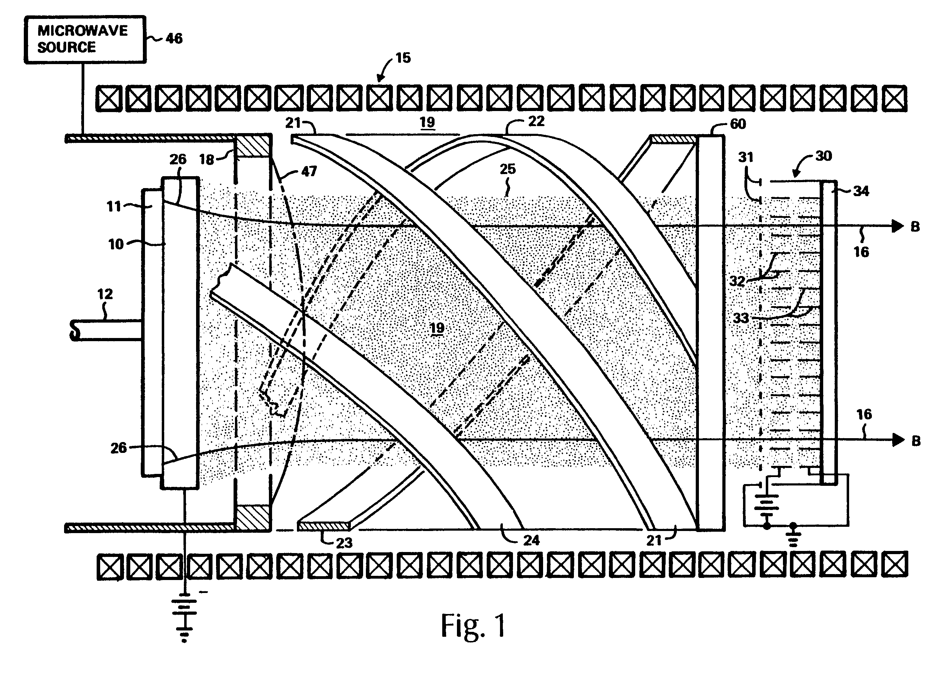

Referring now particularly to Fig. 1, there is illustrated a somewhat schematic overall view of one apparatus for carrying out the present invention. The apparatus includes a plate 10 which may be monolithic or segmented. It provides a source of material from which we produce a vapor comprising molecules that can be ionized to produce a plasma which includes atoms of an element having at least two isotopic species. By way of example, the plate 10 may consist of uranium metal. In all of the following description, where operating parameters are specified, it will be understood that we are referring to uranium enrichment. The present invention is not limited to uranium, however; with proper modification of the operating parameters, the concepts may be used for enrichment of substantially any element that is amenable to forming a plasma containing ions that comprise atoms of the specific element.

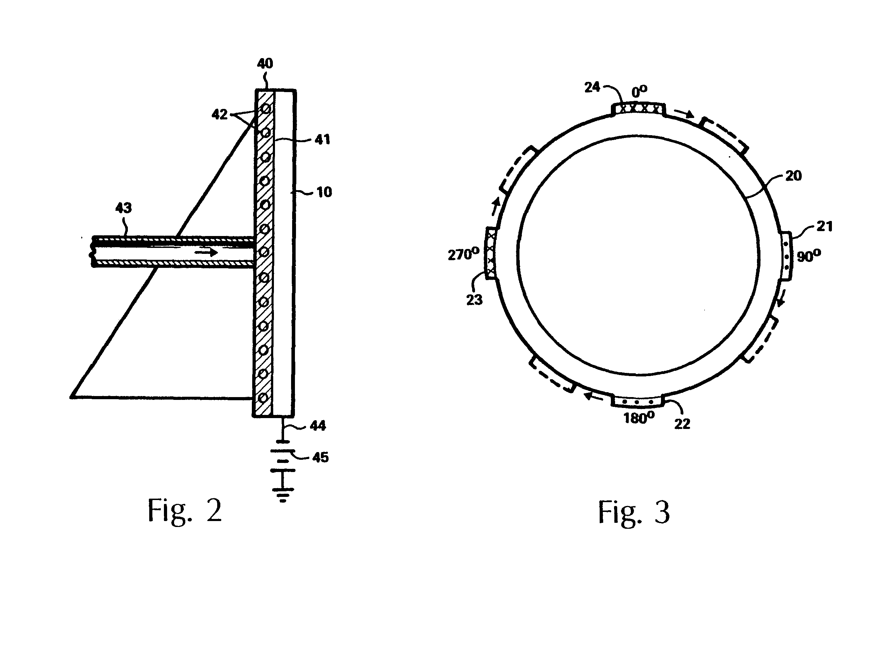

Plate 10 is secured to, and in thermal contact with a heat exchanger 11 which is cooled by a coolant through a manifold 12 as will be more fully explained in connection with Fig. 2. A plurality of magnetic coils 15 peripherally encompass the apparatus for generating a magnetic field B, shown by the arrows 16. The coils 15 may consist of a super conductive material cooled by liquid helium. Superconductivity, however, is not an essential characteristic of the invention.

As noted above, the system continuously generates fresh plasma in the source region, at one end of the magnetic field, and a stream of dense plasma flows along the B-field through the excitation zone. Commercial-quantity production of enriched product requires that the system have a high through put capacity, preferably sufficient to process of the order of one-half to one kilogram of natural-abundance uranium per second. Accordingly, the plasma source preferably provides a uranium-ion flux of the order of $10^{14}$ ions per square centimeter per second. In a preferred embodiment, we satisfy this desideratum by continuous sputtering of un-ionized material from plate 10, at the upstream end of the source region, to form a cloud of un-ionized uranium vapor of uniform density across the plasma pathway. Uranium atoms contained in this vapor are ionized, in-situ within the magnetic field to produce the desired flow of plasma containing ions of the element to be isotopically enriched.

Sputtering of material from plate 10 is accomplished by ion bombardment; specifically plate 10 is biased negatively to a potential, relative to collector assembly 30, sufficient so that each inert-gas ion impinging on plate 10 will eject several neutral atoms of the material to be enriched (e.g. uranium). The resulting vapor, after diffusing uniformly across the magnetic field lines, is ionized, in place, to continuously produce plasma that includes ions comprising atoms of the material to be enriched. To this end, free electrons commonly present within the diverging portion of the magnetic field near plate 10 are excited or heated by applying microwave energy at the electron cyclotron resonance frequency, from microwave antenna 18. These excited electrons collide with and thereby ionize uranium atoms at all portions of a cross-section of the plasma column in the diverging-field region as indicated by line 47. In this regard, an important feature of our invention is the fact that electron cyclotron resonance heating (ECRH) occurs substantially only along the thin cross-section 47, in the diverging-field region, where the intensity of the magnetic field is such that the electron cyclotron frequency matches the frequency of the microwave energy being fed to antenna 18. Thus our plasma-source subsystem produces, continuously, a large diameter (e.g., 3 meter) stream of plasma having a density of at least $10^8$ ions per cubic centimeter and a stream velocity or flux of at least about $10^{14}$ ions/cm²/sec. An important advantage of this subsystem is that the plasma density is substantially uniform (free of density striations) across the diameter of the plasma pathway.

To prefentially impart kinetic energy to selected isotope ions within the plasma, a portion of the plasma is subjected to an alternating electric field, transverse to the axis of the plasma column, of a frequency corresponding to the orbital frequency of the selected-isotope ions, or a harmonic of said frequency. In accordance with the present invention, this is effected by a multiphase helical coil arrangement 20, including coils 21, 22, 23 and 24. Preferably, the coils 21—24 are disposed outside the boundaries 25 of the plasma column but in a region where the magnetic field is substantially uniform. The structure, operation and significant advantages of this coil arrangement are explained more fully, hereinafter, in connection with Figs. 3, 4 and 9 of the drawings.

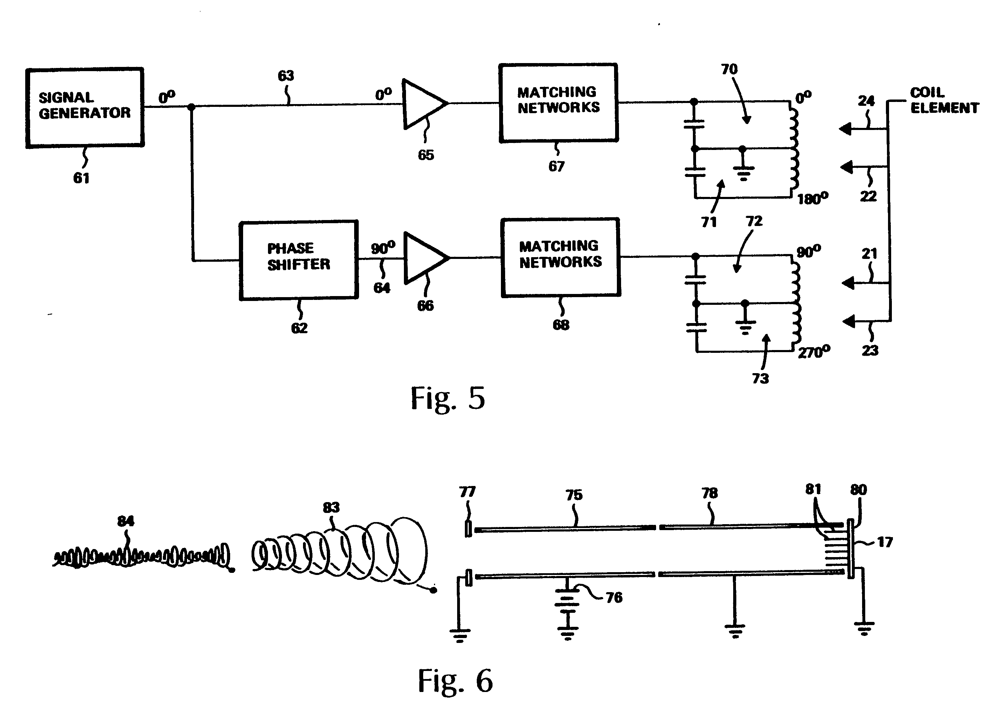

The subsystem for collecting selected-isotope ions is shown generally at 30. It includes a plurality of collector fences or shields 31. These shields are biased to accept the plasma electrons. Subsystem 30 further includes biased product-collection plates 32 which are spaced from and insulated from baffle shields 33. The purpose of the baffles 33 is to protect plates 32 from the sputtering of material from tailsplate 34, this will be more fully explained in connection with Figs. 6—8.

Generation of a uniform plasma

Isotope separation, that is the enrichment of a desired isotope, preferably is carried out in a uniform density plasma; that is, a body of plasma substantially free of spatial variations in density and/or electric potential. The reason why it is necessary to provide a substantially uniform plasma within certain limits is that otherwise line broadening will take place. This means that the cyclotron resonant frequency of one isotope may overlap that of another isotope. This, of course, would tend to preclude differential acceleration of the selected-isotope ions and, therefore, would frustrate isotope separation (i.e., collection) based on preferential collection of ions having higher kinetic energies. This may be due to variations in the location potential which results in that the frequency shift, that is line broadening. The magnitude of this effect depends on the amplitude of the potential variations and the spatial distance of such variations. The potential variations must be kept small enough so that the line broadening does not affect the separation of the isotopes. If the variations occur over extremely short distances where the distance is short relative to the ion cyclotron orbit, larger perturbation levels can be tolerarated, but the same constraints apply. Thus where $\Delta\omega/\omega$ is the width of the line, then it should be approximately equal to $k^2e\phi/2m\omega^2$ where m is the mass of the particle, $\omega$ is the applied excitation frequency, $\phi$ is the amplitude of the potential variations and $k=2\pi/\lambda$, where $\lambda$ is the scale length for the potential perturbations and e is the electronic charge of the ion. This linewidth $\Delta\omega/\omega$ should be kept small relative to the mass difference of the ions to be separated. That is $\Delta\omega/\omega$ less than $\Delta m/m$.

As an example, consider a plasma containing uranium ions of mass 235 and 238. If potential variations of $\phi=.1$ volt occurred with a characteristic wavelength of .0254 meters, when the magnetic field was 20,000 Gauss, the linewidth incurred by these potential variations would be of the order of:

$$\frac{\Delta\omega}{\omega} = \frac{k^2e\phi}{2m\omega^2}$$

where
  $k=2\times\pi/.0254$
  $\phi=.100$ volt
  $e=1.6\times10^{-19}$ coulombs
  $m=235\times1.67\times10^{-27}$ kilograms
  $\omega=8.11\times10^5$ sec$^{-1}$
therefore
$$\Delta\omega/\omega=.0018 \text{ or } .18\%$$

for uranium the percentage difference in mass, $\Delta m/m$, between isotopes U235 and U238 is .013 or 1.3%. The conditions thus described represent a uniform plasma suitable for differentially imparting kinetic energy to selected-isotope ions. In practice, linewidths on the order of the mass difference will be tolerable for applications with modest enrichment goals. For the case considered, that of uranium, the plasma could exhibit larger non-uniformities and still provide selective energization. For example represents a sufficiently uniform plasma for very efficient enrichment of uranium.

In preferred embodiments of our invention the plasma is not only uniform, as discussed above, but is also quiescent (as more specifically defined in U.S. patent application Serial No. 860,421) and is a dense plasma, having a density of at least about $10^8$ ions per cubic centimeter and, preferably, greater than $10^{10}$ uranium ions/cm$^3$. For isotopic enrichment of other elements and/or with higher magnetic field intensities one may use even higher plasma densities.

In accordance with the present invention the uniform-density, quiescent plasma is generated by the combination of two separate, successive steps: First, a dense vapor of un-ionized uranium atoms is created by bombarding plate 10 with high-velocity ions which sputter uranium atoms from the surface of plate 10; energetic ions impacting the surface of plate 10 transfer their kinetic energy to uranium atoms or molecules which thereby acquire sufficient energy to escape from the surface. Thus there is formed, in the vicinity of plate 10, a cloud of uranium vapor which can diffuse across the magnetic field lines to provide a substantially uniform density over a cross-sectional area corresponding to that of plate 10. Second, this uniform-density vapor is ionized, in-situ within the magnetic field, by causing high-energy electrons to impart with and thereby ionize large numbers of the uranium atoms contained in the uniform-density plasma. In this manner a dense, uniform-density, quiescent plasma is formed within the large diameter magnetic field 16.

Apparatus for implementing the foregoing steps is shown in Fig. 2. It consists of a monolithic or segmented plate 10 of uranium metal. The uranium must be cooled and to this end a heat exchanger 40 is provided. The heat exchanger may be connected to the uranium plate 10 to be in thermal contact therewith. This may, for example, be effected by nickel plating of the uranium plate 10. The heat exchanger 40 may be brazed or otherwise connected to the nickel-plated back surface 41 of the plate 10 and provided with a plurality of internal tubes 42 through which a coolant may be conducted by conduit 43. A support structure for the plate 10 and heat exchanger 40 may be provided as shown schematically at 48 in Fig. 2. The thickness of the uranium plate preferably is between 6 and 10 cm, the thickness being limited by the need to conductively transfer to heat exchanger 40 the thermal energy generated by energetic ions impacting the front surface. Thus, if the plate 10 were too thick, its front surface would heat up so much as to cause a phase transition of the uranium, the result of which is that the plate would tend to bulge. Moreover, if the plate is too thick the front surface will become molten and material will be lost without being sputtered. The plate 10 preferably is biased, relative to collector assembly 30, at a negative voltage of at least 400 to 500 eV, provided for example by a biasing voltage source 45. It will be understood that the magnitude of this biasing voltage will depend on the material which is to be sputtered from plate 10 and isotopically enriched. In general, the biasing voltage should be high enough so that each inert gas ion impinging on plate 10 will eject, i.e. sputter, several atoms of the material to be enriched. Sputtering of material, e.g. uranium vapor, from plate 10 requires a supply of positive ions within the magnetic field adjacent plate 10. At start-up there are enough inert-gas ions (e.g. argon) present in the chamber to initiate sputtering from plate 10 as soon as the negative biasing voltage is applied. As the system reaches steady-state operating conditions the dense plasma provides a copious supply of positive ions (e.g. uranium ions) in the vicinity of plate 10; and a sufficient number of these uranium ions impinge on plate 10 for copious production of vapor. Thus, under steady-state operation, self-sputtering dominates and there is no requirement for an abundance of inert-gas ions within the plasma pathway. The sputtering of the uranium may be initiated, for example, by positive argon ions or other inert gas ions commonly present within the plasma column. The energy of the sputtering may be on the order of 100 watts/cm².

Neutral uranium atoms are ionized in-situ, within the magnetic field, by electron bombardment. To this end microwave energy is fed from a source 46 (see Fig. 1) by means of microwave horn 18 into the diverging-field region of the magnetic field. Curved line 47 indicates a region of constant intensity magnetic field. The horn 18 delivers a frequency corresponding to electron cyclotron resonance along line 47. The electrons are kinetically energized (i.e. heated) by electron cyclotron resonance heating along the line 47 where the magnetic field intensity is such that the orbital frequency of the electrons (around magnetic field lines) is matched to the frequency of the applied microwave energy. Heating of the electrons is a stochastic process, which is to say that each and every electron has the same opportunity to acquire increased kinetic energy, and the energy level (i.e. electron temperature) referred to in the following means the average energy of the electrons in a thin cross-section along the surface 47. In the use of the present invention for efficient uranium enrichment the plasma preferably should consist primarily of singly ionized uranium atoms—that is, atoms from which only one electron has been stripped. For uranium, it takes about 6 electron volts (eV) of energy to produce single-charged ions, and about 12 eV to produce doubly-charged ions. The optimum average electron temperature to be used is a compromise between acceptable efficiency of ionization and an acceptable minimum of doubly-charged ions. For uranium enrichment, the average electron temperature used is in the range of 1 to 2 eV. Due to the Boltzmann distribution of electron energy levels, when the average electron temperature is in this range there are enough electrons at 6 eV to produce single-charged ions at an adequate rate and few enough at 12 eV that the number of doubly-charged ions does not significantly impair differential acceleration of the $U^+$ ions. The average electron temperature may be controlled by varying the microwave power input and the biasing voltage on plate 10. These relationships are significantly different from what might be intuitively expected, since increases in the biasing voltage and in microwave power both result in lower average electron temperature. This occurs because an increase in the biasing voltage increases the number of neutral atoms sputtered from plate 10, and these additional atoms absorb additional energy from the excited electrons due to increasing numbers of electron-ion collisions, thus lowering the average electron energy. Increasing the microwave power will increase the plasma density (and therefore the frequency of inelastic collisions), which again results in a lower average electron temperature.

In summary, for efficient isotope separation, one should adjust the input microwave power to a level such that a great majority of the plasma ions are singly ionized and the partial population of $U^{++}$ ions is not so high as to significantly interfere with differential acceleration of the singly-ionized particles, by means of ion cyclotron resonance heating in the excitation zone. We currently consider it desirable to heat the electrons to an average kinetic energy level between 0.1 and 0.3 of the ionization potential of the specific material to be isotopically enriched.

The immediately preceding paragraphs are predicated on a specific embodiment in which singly-charged U235 ions are differentially accelerated (by ion-cyclotron-resonance heating in the excitation zone) and, therefore, it is desirable to minimize the partial population of doubly-charged ions. But the present invention is not so limited; in a larger sense it contemplates isotope separation by differential heating of substantially any selected-isotope ions that contain atoms of an element having at least two isotopes. For example, one may choose to employ a dense plasma in which doubly-charged uranium ions are predominant, and tune signal generator 61 to the ion cyclotron resonance frequency of doubly-charged U235 ions. Alternatively one may use a signal generator that produces RF power at two separate frequencies, the first corresponding to the orbital frequency of $^{235}U^+$, and the second corresponding to the orbital frequency of doubly-charged ions. In this case, both the singly-charged and the doubly-charged ions that comprise U235 will be accelerated more than the corresponding U238 ions; and, consequently, enhanced separation efficiency may be realized in that U235 ions can be preferentially collected, both those singly charged and the doubly charged ions. As noted heretofore, the same principles apply to elements other than uranium. The present invention is not limited to uranium, or heavy metals or even to elemental materials; one may apply the concepts to isotope separation by means of differential acceleration of complex ions that contain atoms of any element having at least two isotopes. For example, within the spirit and scope of the invention one may practice uranium enrichment by employing a plasma consisting primarily of uranium fluoride ions; and with appropriate modifications the process and apparatus may be used for isotope separation of materials such as molybdenum, palladium, rhodium and rutheium, as well as various radioactive isotopes suitable for medical diagnosis and/or therapy, for industrial measuring, non-destructive testing and radiography and for radiopharmaceutical purposes.

As noted above, the frequency of the microwave power delivered by source 46 is matched to the electron cyclotron resonance frequency in a selected cross-section (e.g. surface 47) of the diverging-field region adjacent but not contiguous to plate 10. Thus, the correct microwave frequency depends on the B-field intensity used in a specific installation. For example, if the chosen magnetic-field strength is 2 T (20,000 Gauss) the frequency of microwave source 46 should be 56 GH$_z$ ((gigahertz). If one chooses to use a 2.2T (22,000 Gauss) magnetic field, a frequency of about 60 GH$_z$ is required. The microwave power source 46 may comprise any suitable microwave generator having the necessary output power capacity. One suitable device is a Gyrotron tube available at power capacities up to 200 Kilowatts per tube from Varian Associates, as their model VGA 8006. Alternatively, with appropriate modifications of the system and its operating parameters, one may use VHF power for ECR heating of electrons in the diverging field region.

Differential acceleration of selected-isotope ions

The ultimate purpose of our process and apparatus is to produce isotopically enriched material by preferentially collecting selected-isotope ions on the basis of the higher energy levels to which such ions are raised. A necessary intermediate objective, therefore, is to differentially energize ions containing the selected isotope relative to the energization of other-isotope ions and other particles, if any. In accordance with the present invention this differential energization is accomplished by applying to the large area plasma column at alternating electric field of a frequency such that selected-isotope ions are preferentially accelerated to travel in expanded helical orbits around magnetic field lines throughout the plasma. Isotope separation (i.e. production of enriched product) then may be accomplished by preferentially collecting the selected-isotope ions by any one of several techniques that depend on the higher velocity, kinetic energy, or larger orbit diameters of the selected-isotope ions.

Differential energization of selected-isotope ions is accomplished by two pairs of drive coils, that is by two pairs of inductors. The four coils are energized close to the ion cyclotron resonant frequency of the selected isotope, that is, for example, U235.

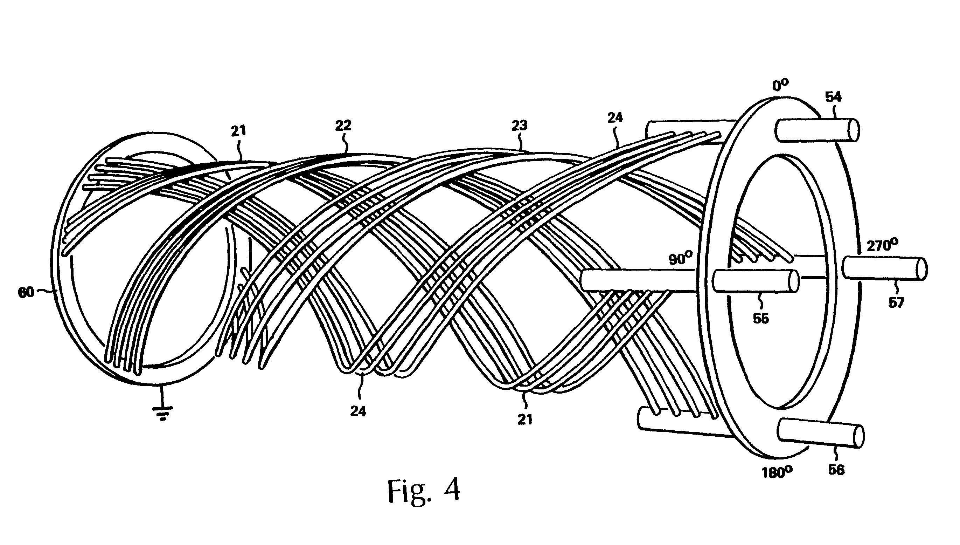

As shown particularly in Figs. 3 and 4, the four coils 21, 22, 23 and 24 are driven in quadrature phase, that is 90° apart. Thus the four conductors 21—24 may have the respective phases 0°, 90°, 180° and 270°. Each of the four conductors may either be a conductive sheet or a bundle of filaments. As shown in Fig. 4, they are driven by a respective set 54, 55, 56 and 57 of transmission lines which are fed with alternating current power, at the prescribed frequency, from the circuitry as shown in Fig. 5. The four drive coils 21—24 may be electrically connected by a ring 60 disposed at the far end of the drive coils. The four drive coils may be wound either in a clockwise or counter clockwise direction.

The electrical phasing of the coils must be selected in conjunction with the direction of the magnetic field to generate the electric field in the plasma which will preferentially accelerate ions. By varying the phasing of the coils and direction of rotation of the electric field can be made right handed or left handed with respect to the magnetic field lines. The coil configuration as described generates an electric field of approximately constant magnitude which rotates in time at a frequency corresponding to the orbital frequency of the selected-isotope ions. It is this direction of rotation which must be properly chosen. The direction of rotation of the electric field may be simply reversed by impressing the 90° phase on conductor 24 and the 270° signal on conductor 22. This may be effected by interchanging the inputs to the transmission lines 57 and 55.

As shown particularly in Figs. 1 and 3, the plasma column 19 is disposed within the four drive coils 21—24. The plasma 19 generally forms a cylindrical column confined by the magnetic field and within that column the magnetic field should be as uniform as possible. By means of the four drive coils, selected-isotope ions within the plasma 19 are preferentially accelerated to travel in helical orbits of ever increasing size. On the other hand, the undesired-isotope ions are not in resonance with the frequency imparted to the drie coils. Hence, they will form small orbits which are periodically varying in diameter so they cannot continuously increase in size. As a result, the selected-isotope ions obtain more kinetic energy and have a larger diameter of their orbit.

The cross-sectional diameter of the plasma column, within the uniform magnetic field should be, at least, substantially larger than the maximum diameter of the helical orbits of the selected-isotope ions; and, preferably, its diameter is at least an order of magnitude larger than such orbits, thereby enabling simultaneous acceleration of ions in orbits around a substantially infinte number of axes spaced apart throughout the plasma.

Fig. 5 schematically shows in block form the circuit for driving the drive coils 21—24. They are driven by a signal generator 61. Radio frequency power from generator 61 may be split up by a phase shifter 62 so that lead 63 is at 0° and the lead 64 at 90°. The two phases are amplified by respective amplifiers 65 and 66. Impedance matching networks 67 and 68 are provided for efficiently coupling power to the drive coils. Matching network 67 feeds two parallel resonant circuits 70 and 71, each of which has a capacitor and an inductor. The junction between the two capacitors and the two inductors is grounded whereby two phases of 0° and 180° may be obtained to feed the respective coils 20 and 22 through transmission lines 54 and 56. Similarly, matching network 68 feeds two resonant circuits 72 and 73 which preferably are identical to the resonant circuits 70 and 71. Hence, from circuits 72 and 73, electromagnetic energy at phases 90° and 270° is obtained to feed the two drive coils 21 and 23 through transmission lines 55 and 57.

The frequency generated by signal generator 61 must correspond to the orbital frequency of rotation of the selected-isotope ions that are to be differentially energized, e.g. the U235 ions, or a harmonic of this orbital frequency. Over that portion of the plasma column within which differential acceleration of selected-isotope ions is to be achieved, by application of the alternating electric field to the plasma, the magnetic field strength preferably should be substantially uniform and time invariant; thus, the magnetic field preferably has a small mirror ratio of about 4%. This assures that the alternating electric field applied to the plasma is of a frequency corresponding to the orbital frequency of selected-isotope ions orbiting around magnetic field lines throughout the length and breadth of the plasma column within the excitation zone.

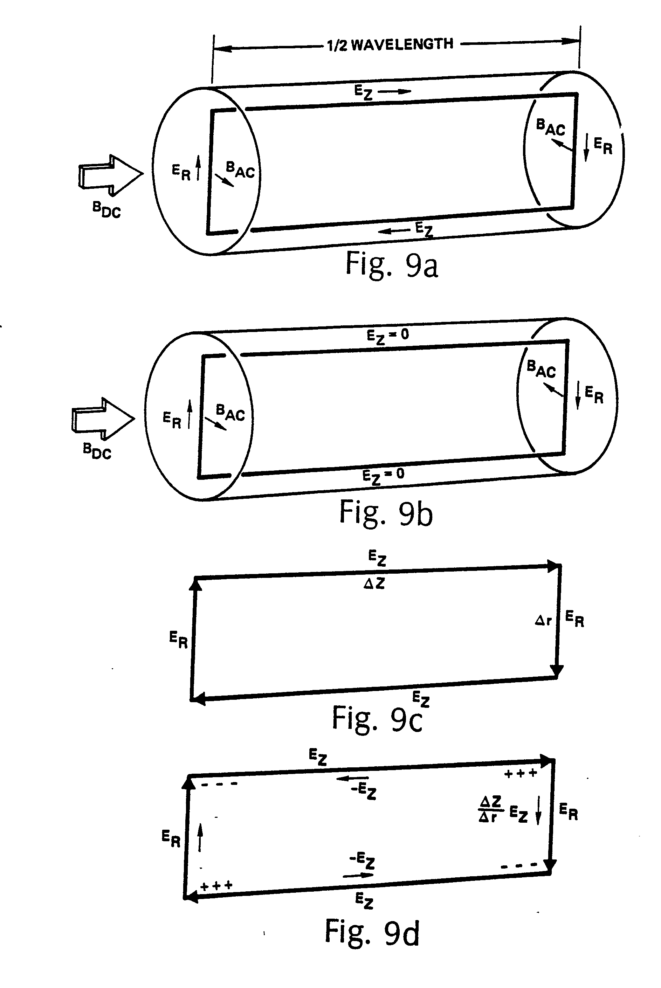

Our drive coil assembly causes the alternating electric field to penetrate to all incremental portions of the plasma within the excitation region. How this is achieved can be more fully understood from consideration of the diagrams shown in Figs. 9(a) through 9(d). Let us consider an elongated plasma column having a diameter of, for the example, one meter located within the circumferentially encompassed by the drive coil assembly 21—24. These inductors produce in the plasma column an alternating magnetic field with the rotating magnetic vector substantially normal to the axis of the plasma column; and an alternating electric field is induced in the plasma with the rotating electric field vector extending substantially normal to both the magnetic vector and the axis. As noted hereinabove, the inductors 21—24 extend helically around the plasma column at an angle of about 40°. This 40° angular displacement or twist in the coil assembly is indicated also, in Fig. 3. This means that the induced electric field vector, at any two longitudinally-spaced cross-sections of the plasma, will be angularly displaced in proportion to the spacing between the cross-sections; for example, in a vacuum (i.e. in the absence of the conductive plasma), the induced electric field vector at the right end of Fig. 4 would be phase shifted 180° (degrees) relative to that at the left end. This is illustrated in Figs. 9(a) and 9(b) showing a 1/2 wavelength segment of the region within the drive coil assembly, firstly assuming vacuum conditions, Fig. 9(a), and secondly, assuming a dense plasma column, Fig. 9(b). This cylindrical segment is shown with the steady magnetic field, $B_{DC}$, normal to the axis and angularly displaced 180° at the right-hand end relative to the left-hand end; and, of course, the induced electric field vector, $E_R$, at the right end is opposite to that at the left end. In a vacuum these two oppositely polarized electric fields would, in effect, provide longitudinal electric-field components, $E_Z$, extending in opposite directions at the top and bottom, respectively of the cylindrical excitation region. With a dense, highly conductive plasma present the conditions are altered: the longitudinal conductivity of the plasma far exceeds the cross-field conductivity, because electrons are substantially free to move longitudinally (impeded only slightly by collision effects) while they are magnetically constrained from flowing transversely of the B field. Thus, as best illustrated in Fig. 9(d), the response of the plasma to the induced fields $E_R$ and $E_Z$ is to shuttle electrons back and forth, longitudinally of the magnetic field. $B_{DC}$, at all transversely spaced incremental portions of the plasma column. This produces $-E_Z$, substantially cancelling the original $E_Z$. And the cyclically flowing electrons provide a charge buildup, e.g. a negative charge at the top left in Fig. 9(d) and a positive charge accumulation of the lower left. Of course, this charge buildup occurs cyclically at the frequency of the applied alternating field, $B_{AC}$; but, at any instant the charge differential between the top and bottom of Fig. 9(d), at the left end, provides a potential gradient therebetween which enhances $E_R$ at that end.

The current carrying elements 21—24 of the drive coil assembly may be heavy metallic strips (as shown in Fig. 1) or may each consist of several conductors, as shown in Fig. 4. The windings may be in the same sense or be a combination of right-handed and left-handed windings. The preferred winding is chosen to maximize acceleration of the selected-isotope ions while minimizing heating of the unwanted species. Unless care is exercized in this regard the unwanted species will be heated, to some extent due to Doppler shifting of the frequency of the applied electric field, as seen by high velocity ions. This Doppler-shift effect may be reduced to an acceptable level by taking these potential effects into account in designing the specific configuration of the drive coil assembly.

In summary, then, we use a helically extending drive coil assembly 21—24 for inducing a transverse alternating electric field that is phase shifted, angularly, as one moves along the length of the excitation region. This provides a longitudinal electric field component, throughout the plasma, to shuttle free electrons longitudinally back and forth in the plasma, at the ion-cyclotron-resonance frequency. The resulting charge displacement enhances the transverse electric field, $E_R$, at all transversely-spaced incremental portions of the plasma. And, thereby, even though the large-area plasma is dense and high conductive, the radio frequency pumping energy is applied to all portions of the plasma within the excitation region. In commercial-plant sized machines, the alternating electric field intensity near the center of a large-diameter (e.g. 2—3 meter diameter) plasma column will be substantially less than near the periphery. It is readily feasible, however to maintain this intensity within a single order of magnitude throughout the large-diameter plasma.

Collection of the enriched isotope

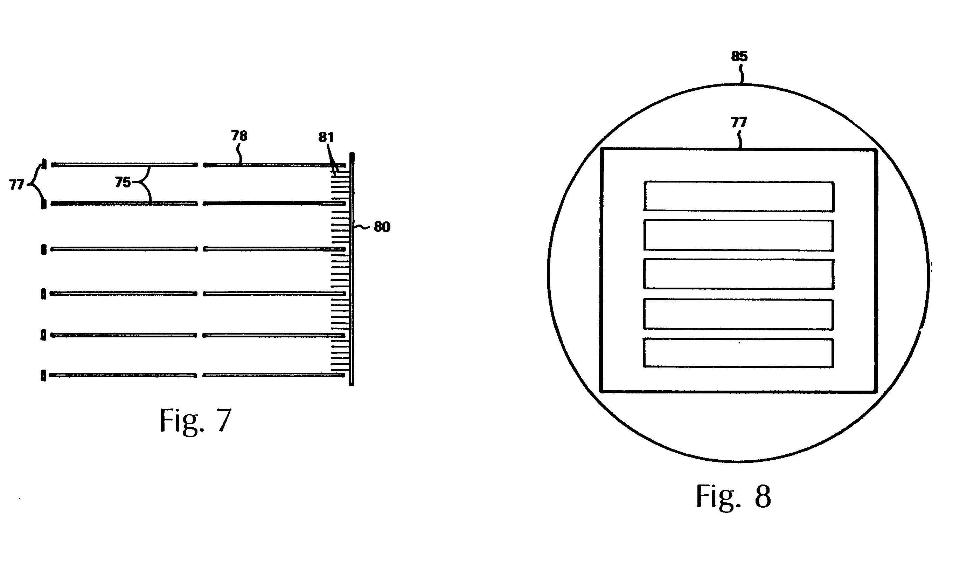

The collection subsystem for preferentially collecting selected-isotope ions, such as U235 ions, is shown in Figs. 6—8 to which reference is now made. As shown particularly in Fig. 6, there are a plurality of enriched-product collection plates 75. The product plates 75 serve the purpose of collecting the enriched isotopes and are disposed parallel to and spaced from each other as shown particularly in Fig. 7. They are positively biased, for example, by a battery 76 to a voltage between 20 and 200 volts. Ahead of the product plates are fences or shields 77 which may be maintained at ground potential as shown. They are biased to accept plasma electrons. A set of deep baffle plates 78 are disposed in line with and to the right of product plates 75. They are also maintained at ground potential. Their purpose is to capture unenriched material which may be sputtered from the tailsplate 80, which is also maintained at ground potential. The effects of sputtering of material from tailsplate 80 is reduced through a series of mini baffles 81 which extend from the tailsplate 80 parallel to and toward the product plates 75. The deep baffles 78 further shield the product plate 75 from tailsplate sputtering.

The collector subsystem, shown in Figs. 6—8, operates by energy discrimination; that is by virtue of the electric field between the product plate 75, on the one hand, and the shield 77, the baffle 78, the tailsplate 80 and the mini baffles 81. In addition, it operates by virtue of the differences in the diameters of the ion orbtis. Thus Fig. 6 illustrates a preferentially accelerated U235 ion having an enlarged orbit 83, and the lesser-diameter helical orbit 84 of an ion comprising U238. The spacing between adjacent collection plates 75 (Figs. 6 and 7) is chosen so that, statistically, a much larger percentage of the selected-isotope ions, e.g. U235 ions, will impinge on plates 75 than the percentage of other-isotope ions collected. This preferential collection may be accomplished on the basis of the larger orbit diameters of the selected-isotope ions or on the basis of their higher kinetic energies (i.e. velocities). As set forth in the following, the two bases may be advantageously employed in combination. The positive bias on the product plate 75 produces a selective collection based upon the energy of the impinging particles. For each isotope of interest the energy distribution of the ions of that isotope can be characterized by an average energy. If the bias is chosen to correspond to an energy lower than the average energy of selected-isotope ions, the majority of that species is collected preferentially at the product plates. Conversely, if the bias is large compared to the average kinetic energy of non-selected isotope ions, a larger fraction of these other-isotope ions will be repelled. The result is a high degree of flexibility available by changing both geometry and bias. In particular for a given set of conditions a higher enrichment factor can be achieved by increasing the bias on the product plates. But if a higher throughput is desired, albeit with a lower enrichment factor, one may reduce or even dispense with the bias on plates 75. The fence 77 shown more clearly in Fig. 8, may consist of graphite. The tailsplate 80 preferably consists of tantalum, and the product plates 75 and baffle plates 78 preferably are formed of graphite. It will be understood that there may be any number of product plates and baffles rather than the three pairs of Fig. 7. And the product plates may be spaced apart throughout the collection zone, longitudinally as well as transversely.

To minimize electric-gradient repulsion of ions the gap between fence plates 77 and product plates 75 should be made smaller than the pitch length of the helices of the selected-isotope ions. Also, the product plates are spaced apart so as to intercept and collect a majority of the 235U ions while allowing 238U ions to pass through to the tailsplate; this interspacing between adjacent plates 75 preferably should be smaller than the diameter of the orbits of selected-isotope ions, e.g., 235U ions, and larger than that of the 238U ions. In summary the collector assembly preferentially collects the selected-isotope ions on the basis of the larger diameters of their orbits and/or their higher kinetic energies.

Alternatively one might use, in conjunction with our invention, the collector subsystem described in U.S. Patent 4,208,582 or any one of the preferential collecting techniques described in the above-mentioned patents and patent applications of John M. Dawson.

There has thus been disclosed a process of and apparatus for the separation of a desired isotope from other isotopes of an element. A plasma is first formed by providing a vapor that contains neutral atoms of the element to be separated. This is effected by sputtering. The initially neutral atoms (i.e. not ionized) comprised within this vapor are subsequently ionized by impact with relatively high energy electrons. The electrons are energized to an appropriate kinetic energy level by applying microwave energy at the electron cyclotron reasonance frequency of free electrons within a diverging-field portion of the magnetic field i.e. along a line 47 of constant field intensity. The microwave energy is impressed through a microwave horn to match the impedance of the power source to that of the plasma. Initially, the process is started by energizing free electrons which happen to be present in the apparatus. In this manner a uniform plasma is generated which has high density and is quiescent. The plasma fills a cylindrical plasma pathway and is maintained therein by a steady magnetic field having a substantially constant magnetic-field strength throughout, at least, the excitation region of the plasma pathway.

The dense plasma flowing along this pathway is subjected, in the excitation zone, to an alternating electric field in a manner such that the electric field penetrates all incremental, transversely-spaced portions of the plasma. This is accomplished by means of an induction coil assembly which provides an alternating magnetic field vector extending generally but not precisely, normal to the longitudinal axis of the plasma column. This field inductively applies to the plasma an alternating electric field having a normal-to-the-axis component and a parallel-to-the-axis component. This latter component causes electrons to shuttle longitudinally back and forth, at the applied frequency. This shuttling of electrons creates a potential gradient transversely across each incremental portion of the plasma in the excitation region and, thereby, the alternating electric field is effectively coupled and applied to all portions of the dense plasma. The induction-coil assembly preferably comprises two pairs of drive coils which inductively impart and the necessary radio frequency electric field to the plasma.

A collector assembly has been disclosed for preferentially collecting the differentially energized ions. The collector operates by a combination of geometry and electrical bias for preferentially collecting, and removing from the plasma, the selected-isotope ions. The front of the collector assembly, facing toward the plasma source, is provided with fence shields which are biased to minimize the impact of plasma electrons. The collector assembly features a set of product plates followed by a set of deep baffles. Material that may be ejected (i.e., sputtered) from the tailsplate by the impact of high velocity particles is collected by the deep baffle plates and by mini baffles disposed on the tailsplate. The tailsplate, baffles and mini baffles are maintained at ground potential while the product plates are maintained at a relatively high positive potential to repel low-energy, other-isotope ions while collecting a large percentage of the selected-isotope ions.

## Claims

1. A process for isotope enrichment comprising the steps of:

generating a magnetic field having a longitudinal axis;

generating in said magnetic field a column of plasma including ions of an element having at least two isotopes;

applying to the column an alternating electric field of a frequency corresponding to the orbital frequency of selected isotope ions or a harmonic of said orbital frequency, for preferably accelerating the selected isotope ions so that such ions travel in expanded helical orbits within said plasma and with kinetic energies substantially exceeding the energy of other isotope ions, said column having dimensions normal to said axis at least several times larger than the expanded orbit of a selected isotope ion; and

collecting said selected isotope ions,

characterised in that the alternating electric field is applied by means of a plurality of conductors (21, 22, 23, 24) extending helically around a portion of the plasma column, and in that alternating current of said orbital frequency of a harmonic of said orbital frequency is fed to said conductors with the phase of adjacent conductors being shifted.

2. The process of Claim 1 where the alternating electric field is applied to the plasma by means of four conductors and each of said conductors is fed with alternating current whose phase is shifted 90° apart from that fed to the next adjacent conductor.

3. Apparatus for isotope enrichment comprising:

means (15) for generating a magnetic field having a longitudinal axis,

means (10, 18) for generating in the magnetic field a column of plasma including ions of an element having at least two isotopes;

means for applying an alternating electric field to the column of a frequency corresponding to the orbital frequency of selected isotope ions, or a harmonic of said orbital frequency, for preferably accelerating the selected isotope ions so that such ions travel in expanded helical orbits within said plasma and with kinetic energies substantially exceeding the energy of other isotope ions, said column having dimensions normal to said axis at least several times larger than the expanded orbit of a selected isotope ions; and

means (30) for collecting said selected isotope ions; characterised in that:

the means for generating an alternating electric field comprises a plurality of conductors (21, 22, 23, 24) extending helically around a portion of the plasma column and a power supply for feeding an alternating current of said orbital frequency or a harmonic of said orbital frequency to said conductors, the phase of adjacent conductors being shifted.

4. An apparatus in accordance with Claim 3 wherein said plurality consists of four conductors and each of said conductors is fed with alternating current whose phase is shifted 90° apart from that fed to the next adjacent conductor.

5. An apparatus in accordance with Claim 4 wherein said four conductors are equi-angularly spaced apart circumferentially of the plasma pathway.

## Patentansprüche

1. Verfahren zur Isotopen-Anreicherung mit folgenden Schritten:

Erzeugen eines Magnetfeldes mit einer Längsachse;

Erzeugen einer Plasmasäule in dem genannten Magnetfeld mit Ionen eines Elementes, das zumindest zwei Isotope aufweist;

Anlegen eines elektrischen Wechselfeldes an die Säule mit einer Frequenz, die der Orbital-Frequenz ausgewählter Isotopen-Ionen oder einer Harmonischen der genannten Orbital-Frequenz entspricht, um bevorzugt die ausgewählten Isotope zu beschleunigen, so daß solche Ionen im genannten Plasma auf aufgeweiteten wendelförmigen Bahnen bewegt werden und zwar mit kinetischen Energien, die die Energie anderer Isotopen-Ionen wesentlich überschreiten, wobei die genannte Säule senkrecht zur genannten Achse Abmessungen aufweist, die zumindest um ein Mehrfaches größer sind als die aufgeweiteten Umlaufbahnen der ausgewählten Isotopen-Ionen; und—Sammeln der ausgewählten Isotopen-Ionen, dadurch gekennzeichnet, daß

das elektrische Wechselfeld mittels einer Vielzahl von Leitern (21, 22, 23, 24) angelegt wird, die sich wendelförmig um einen Teil der Plasma-Säule erstrecken, und daß Wechselstrom der genannten Umlauffrequenz oder einer Harmonischen der genannten Umlauffrequenz in die genannten Leiter eingespeist wird, wobei die Phasen benachbarter Leiter verschoben sind.

2. Verfahren nach Anspruch 1, wobei das elektrische Wechselfeld an das Plasma angelegt wird mittels vier Leitern und in jeden der Leiter Wechselstrom eingespeist wird, dessen Phase in bezug auf den Strom des benachbarten Leiters um 90° verschoben ist.

3. Vorrichtung zur Isotopen-Anreicherung mit Einrichtungen (15) zum Erzeugen einer Magnetfeldes mit einer Längsachse,

Einrichtungen (10, 18) zum Erzeugen einer Plasmasäule im Magnetfeld, die Ionen eines Elementes aufweist, das zumindest zwei Isotope hat,

Einrichtungen zum Anlegen eines elektrischen Wechselfeldes an die Säule mit einer Frequenz, die der Umlauffrequenz ausgewählter Isotopen-Ionen oder einer Harmonischen der genannten Umlauffrequenz entspricht, um bevorzugt ausgewählte Isotopen-Ionen zu beschleunigen, so daß solche Ionen auf aufgeweiteten wendelförmigen Umlaufbahnen innerhalb des Plasmas mit kinetischen Energien bewegt werden, die wesentlich über den Energien anderer Isotopen-Ionen liegen, wobei die genannte Säule senkrecht zur genannten Achse Abmessungen aufweist, die ein Mehrfaches der aufgeweiteten Umlaufbahnen der ausgewählten Isotopen-Ionen betragen, und

Einrichtungen (30) zum Sammeln der ausgewählten Isotopen-Ionen, dadurch gekennzeichnet, daß

die Einrichtungen zum Erzeugen eines elektrischen Wechselfeldes eine Vielzahl von Leitern (21, 22, 23, 24) aufweisen, die sich wendelförmig um einen Abschnitt der Plasmasäule erstrecken, sowie eine Spannungsversorgung zum Einspeisen von Wechselstrom mit der genannten Umlauffrequenz oder einer Harmonischen der genannten Umlauffrequenz in die genannten Leiter, wobei die Phasen auf benachbarten Leitern zueinander verschoben sind.

4. Vorrichtung nach Anspruch 3, wobei die genannte Vielzahl von Leitern vier Leiter aufweist und jeder der Leiter mit Wechselstrom beschickt wird, dessen Phasen in bezug auf die des benachbarten Leiters um 90° verschoben ist.

5. Vorrichtung nach Anspruch 4, wobei die genannten vier Leiter jeweils mit gleichmen Winkelabstand am Umfang des Plasmas angeordnet sind.

**Revendications**

1. Un procédé pour l'enrichissement isotopique, comprenant les étapes suivantes:
on produit un champ magnétique ayant un axe longitudinal;
on produit dans ce champ magnétique une colonne de plasma contenant des ions d'un élément ayant au moins deux isotopes;
on applique à la colonne un champ électrique alternatif d'une fréquence correspondant à la fréquence orbitale d'ions de l'isotope sélectionné, ou à un harmonique de cette fréquence orbitale, pour accélerer de préférence les ions de l'isotope sélectionné, afin que de tels ions de déplacent en suivant des orbites hélicoïdales de taille croissante dans le plasma, et avec des énergies cinétiques dépassant notablement l'énergie d'ions d'autres isotopes, cette colonne ayant des dimensions dans la direction normale à l'axe qui sont au moins plusieurs fois supérieures à la dimension de l'orbite de taille croissante d'un ion de l'isotope sélectioné; et
on collecte les ions de l'isotope sélectionné,
caractérisé en ce que le champ électrique alternatif est appliqué au moyen d'un ensemble de conducteurs (21, 22, 23, 24) qui s'étendent en hélice autour d'une partie de la colonne de plasma, et en ce qu'un courant alternatif dont la fréquence est égale à la fréquence orbitale précitée ou à un harmonique de cette fréquence orbitale, est appliqué aux conducteurs précités, avec un déphasage entre des conducteurs adjacents.

2. Le procédé de la revendication 1, dans lequel le champ électrique alternatif est appliqué au plasma au moyen de quatre conducteurs, et chacun de ces conducteurs est alimenté avec un courant alternatif dont la phase est décalée de 90° par rapport à celle du courant qui est appliqué au conducteur adjacent suivant.

3. Appareil pour l'enrichissement isotopique comprenant:
des moyens (15) pour produire un champ magnétique ayant un axe longitudinal;
des moyens (10, 18) pour produire dans le champ magnétique une colonne de plasma contenant des ions d'un élément ayant au moins deux isotopes;
des moyens pour appliquer à la colonne un champ électrique alternatif d'une fréquence correspondant à la fréquence orbitale des ions de l'isotope sélectionné, ou à un harmonique de cette fréquence orbitale, pour accéler de préférence les ions de l'isotope sélectionné, afin que ces ions se déplacent en suivant des orbites hélicoïdales des taille croissante dans le plasma, et avec des énergies cinnétiques notablement supérieures à l'énergie des ions d'autres isotopes, cette colonne ayant des dimensions dans la direction normale à l'axe qui sont au moins plusieurs fois supérieurs à l'orbite de taille croissante d'un ion de l'isotope sélectionné; et
des moyens (30) pour collecter les ions de l'isotope sélectionné; caractérisé en ce que:
les moyens destinés à produire un champ électrique alternatif comprennent un ensemble de conducteurs (21, 22, 23, 24) s'étendant en hélice autour d'une partie de la colonne de plasma, et une alimentation destinée à appliquer aux conducteurs un courant alternatif à la fréquence orbitale ou à un harmonique de cette fréquence orbitale, avec un déphasage entre des conducteurs adjacents.

4. Un appareil selon la revendication 3, dans lequel l'ensemble de conducteurs consiste en quatre conducteurs et chacun de ces conducteurs reçoit un courant alternatif dont la phase est décalée de 90° par rapport à celle du courant qui est appliqué au conducteur adjacent suivant.

5. Un appareil selon la revendication 4, dans lequel les quatre conducteurs sont espacés avec des écartements angulaires égaux à la périphérie du chemin du plasma.

Fig. 1

Fig. 2

Fig. 3

EP 0 131 572 B1

Fig. 4

Fig. 5

Fig. 6

EP 0 131 572 B1

Fig. 7

Fig. 8

EP 0 131 572 B1

Fig. 9a

Fig. 9b

Fig. 9c

Fig. 9d